# EUROPEAN PATENT APPLICATION

(11) **EP 4 793 413 A1**
(43) Date of publication of application: **19.08.2026**
(21) Application number: 26157475.0
(22) Date of filing: 10.02.2026
(51) Int. Cl.: D01F 1/04, D01F 1/06, B32B 5/02, B32B 5/08, B32B 7/12, B32B 27/12, B60J 1/20, B60J 7/00, D06M 17/04, D06P 1/00

(54) **LAMINATE MATERIAL CONTAINING SOLUTION DYED YARNS OR FIBERS FOR AUTOMOBILE ROOF WINDOWS AND CORRESPONDING METHODS AND SYSTEMS**

(30) Priority: 12.02.2025 US 202563757502 P
(71) Applicant: McMurray Fabrics Inc., Aberdeen, North Carolina 28315 (US)
(72) Inventor: McMurray, Brian, Aberdeen, 28315 (US)
(74) Representative: Russell, Tim

(57) **Abstract**

A laminate material for use in an automobile is provided. The laminate material includes an exterior facing layer, an interior facing layer formed from at least a plurality of solution dyed yarns or fibers, and at least one intermediate layer. The intermediate layer(s) join the exterior and the interior facing layer. The laminate material is configured to transition between a retracted state in which the laminate material is at least partially rolled up about an axis and an extended state where the laminate material at least partially covers a window of the automobile so as to at least partially obstruct light passing through the window from entering the automobile. The laminate material is fit to be repeatedly moved between the retracted state and the extended state without exhibiting sag, delamination, or dimensional change that would prevent operation of an activation mechanism configured to extend or retract the laminate material.

## Description

### CROSS-REFERENCE TO RELATED APPLICATION(S)

This application claims priority to U.S. Provisional Application No. 63/757,502, entitled "Laminate Material Containing Solution Dyed Yarns Or Fibers For Automobile Roof Windows And Corresponding Methods And Systems", filed February 12, 2025; the contents of which is hereby incorporated by reference in its entirety.

### FIELD

Embodiments relate generally to laminate materials comprising yarns or fibers formed through solution dyeing for covering windows in automobiles and methods for making the same.

### BACKGROUND

Windows such as sunroof, moonroof, or full glass roof windows are often provided in automobiles. These windows permit high amounts of sunlight to enter into the interior of the automobile, which can result in increased light, heat (e.g., through infrared radiation), and ultraviolet (UV) radiation. In order to address these issues, covers are used to at least partially block the windows and inhibit the sunlight from entering the interior of the automobile. For example, when a sunroof window is not actively being used, the sunroof window may be covered to reduce the amount of light shining through the sunroof window and into the interior of the automobile.

Where covers are used, car manufacturers often want the cover to adhere to a specific appearance and/or color scheme, particularly from the view of the passengers of the automobile. In the past, some car manufacturers wanted to match the color of the cover with the color scheme of the rest of the interior of the automobile. However, the traditional color of the material in these covers may be different than that of the material lining the interior of the automobile.

To account for this, the material that forms the cover is often piece dyed so that the color of the cover matches the color requirements of the car manufacturer. However, such an approach is costly and may lead to less desirable characteristics for the cover.

### BRIEF SUMMARY

In some cases, a window cover may be formed from a laminate material having multiple layers. In some cases, each layer may be piece dyed to obtain a specified color, thereby causing the cover to retain a particular color when viewed from the interior of the automobile (e.g., matching the car manufacturer color specifications). Piece dyeing may be performed after the layer is formed, e.g., after the various yarns have been formed into certain layers (e.g., knitted, woven, or otherwise attached/bonded together (e.g., nonwoven)). With piece dyeing, an entire formed layer of yarns is immersed in a dye lot bath, allowing the colorants to attach to or penetrate the yarns of the layer - thereby causing the layer to retain a specific color corresponding to the colorants. Another approach that can be taken to color materials is yarn dyeing. With yarn dyeing (e.g., package dyeing), colorants are introduced to the yarn after the yarn is formed (but before the entire layer is formed) in order to change the color of the yarn. In some such cases, the yarn is immersed in a dye lot bath with or without other yarns, allowing the colorant to attach to or penetrate the yarn - thereby causing the yarn to retain a specific color.

However, piece dyeing and yarn dyeing both have shortcomings in some important respects. Because the yarns have already been formed before piece dyeing and yarn dyeing, the colorants are not dispersed consistently through the fibers in the yarn and consequently, with piece dyeing and yarn dyeing, the selected color may tend to be not as rich, not consistent, fade over time, and/or not be highly durable. Furthermore, piece dyeing and yarn dyeing requires colorants to be added to a dye lot bath, and only a limited amount of the fabric layers (for piece dyeing) or yarns (for yarn dyeing) may be processed through a single dye lot bath, and a new dye lot bath and corresponding process would need to be restarted (e.g., including formation of new fabric layers and/or yarns). This causes a number of undesirable effects. Notably, each dye lot bath requires a particular blend of colorant, liquid (e.g., water), and other additives to cause the resulting color to match the color specifications. Further, however, there other important properties to impart on the dyed layer or yarn, such as may be based on manufacturer specifications or other parameters for fitness of use - some example properties include light fastness, durability, stretchability, etc. Accordingly, various additives (e.g., auxiliary chemicals) are also introduced to the mixture of the dye lot bath in an attempt to impart such properties on the dyed layer or yarn. This increases costs, overall processing, and makes it more difficult to maintain consistency between different dye lot baths (as many dye lot baths are likely needed to produce the desired number of layers/yarns and ultimate covers). Sometimes this results in needed re-dyeing of layers or yarns. Indeed, piece dyeing and yarn dyeing require a relatively high amount of water, energy, expensive auxiliary chemicals, colorants, and other materials to be used during manufacturing. Additionally, piece dyeing and yarn dyeing approaches prevent more effective and cheaper materials such as certain pigments, e.g., carbon black, or some other colorants from being used. Notably, for example, carbon black pigments offer great coloring effects and impart many desirable properties noted above.

In example embodiments described herein, laminate materials comprising an interior facing layer formed of yarns or fibers formed through solution dyeing (e.g., dope dyeing) are provided. These laminate materials may be used as covers for the automobile windows and for other purposes. Systems incorporating the laminate materials and methods for making the laminate materials in a cost-effective manner are also contemplated in various embodiments described herein.

In various laminate materials described herein, interior facing layers of material and/or other layers may comprise solution dyed yarns or fibers. Notably, the solution dyeing occurs during formation of the yarns or fibers (e.g., including the colorant in the polymer melt prior to extrusion or adding the colorant to the polymer melt during extrusion), and before the yarns or fibers are formed into the interior facing layer (e.g., via knitting, weaving, and/or otherwise attaching/bonding together (e.g., nonwoven processes)). In some embodiments, non-solution dyed yarns, such as undyed natural yarns or natural yarns that may have been dyed after formation, may be used along with solution dyed yarns to form one or more layers of the laminate described herein. Notably, even though the colorant is added prior to formation of the interior facing layer, the correct color during the solution dyeing process may be selected such that the overall color of the laminate material (as viewed from the interior of the automobile) may still meet color specifications (and other properties), such as may be required by the car manufacturer.

In some embodiments, a base material such as a polymer resin may be melted to form a master batch provided in the form of a viscous liquid. The base material may include polyester, nylon, acrylic, polypropylene, polyethylene, and/or another similar material, but other materials may be used in the base material as well. Notably, with solution dyeing, colorant (and potentially other materials) may be blended into the master batch (before the extrusion process) or added during the extrusion process. The colorants and/or other additives may be selected based on the desired final color properties and/or overall performance required. Notably, via such solution dyeing, the colorant and other additives are evenly dispersed throughout the resultant yarns or fibers that are produced. After the yarns or fibers have been formed, the yarns or fibers may then be formed into fabric (e.g., forming knitted fabric, woven fabric, and/or nonwoven fabric) that forms, for example, the interior facing layer of the laminate material used for the cover.

By performing solution dyeing, several benefits may be accomplished. For example, color and other additives are evenly dispersed within the fibers/yarns, which results in the desired color being more durably maintained over time (e.g., the solution dyed yarns or fibers are more resistant to fading from sunlight), the desired color being more uniform, and the yarn or fiber being more resistant in other ways (e.g., due to dispersion of the additives and/or the preferred properties imparted by the colorant used, such as described herein).

Moreover, by using solution dyed yarns or fibers, unexpected results were obtained as, even though traditional piece dyeing was thought as the only viable approach due the strict nature of the color requirements, the invention approach achieves the desired color but at significant cost savings in the form of materials and energy - leading to overall less processing being required versus piece dyeing approaches. Notably, solution dyeing enables a much larger amount of yarn or fiber to be produced, where the yarn or fiber maintains the desired color and/or other properties. In this regard, for example, solution dyeing, such as described herein, enables 10,000 pounds or more of yarn to be formed, which may be run to form the interior facing layer for the laminate material in a continuous process, whereas when a dye lot bath is used in piece-dyeing, only about 1,000 - 2,000 pounds of material can be used to form the interior facing layer for the laminate material before a whole new dye lot and process needs to be started again. Thus, there is significant time and material savings without having to utilize a single dye-lot, let alone when considering the multiple additional dye lots required to make the same number of laminate materials when compared with example embodiments of the present invention. In this regard, solution dyeing yarns or fibers uses less water, energy, chemicals, and colorants, allowing for improved cost-efficiency and for a more environmentally friendly approach relative to other approaches. Solution dyeing also allows for a reduction in water pollution and chemical waste that is produced, which makes it even more environmentally friendly.

Additionally, less expensive colorants like carbon black colorants may now be used when solution dyeing techniques are utilized, allowing even further cost savings to be accomplished. The use of the carbon black colorant provides a desirable level of properties for light fastness, and other properties without requiring any auxiliary chemicals to be added (which are required for lot dye baths in the piece dyeing processes). Some other desirable properties that solution dyeing enables with use of colorants like carbon black colorant and without auxiliary chemicals is that the solution dyed yarn or fiber (and where appropriate, the resultant interior facing layer) does not exhibit croc (e.g., undesirable texture) or color bleeding. It is worth noting that these auxiliary chemicals are often expensive, so proceeding without these auxiliary chemicals tends to provide even further cost-savings. However, one or more auxiliary chemicals may optionally be used in some embodiments. In addition, recycled polymer(s) can be used in the solution dyeing process, further increasing the environmentally friendly nature of the invention.

The laminate materials in various embodiments described herein may be configured to reduce the amount of light shining through a sunroof, a moonroof, or a full glass roof window or other windows in an automobile. Laminate materials may block about 90 percent or more of sunlight from shining through a window and into a vehicle, but laminate materials may also block light in higher percentages such as about 95 percent or more, about 97.5 percent or more, about 99 percent or more, or about 100 percent.

Laminate materials may comprise an interior facing layer, an exterior facing layer, and one or more intermediate layers. The intermediate layer(s) may include an adhesive such as a dot matrix adhesive, web adhesive, or other bonding mechanism/process and/or the intermediate layer(s) may include a film that is configured to melt so that the layers may be bonded together, such as to meet the desired performance requirements. In some embodiments, intermediate layer(s) may include other types of film such as films that are not configured to melt, and the films may be configured to provide the laminate materials with desired properties such as thickness, UV protection properties, strength, and the like. The interior facing layer may be the only layer comprising the solution dyed yarns or fibers in some embodiments, but solution dyed yarns or fibers may also be included in the exterior facing layer and/or the intermediate layer(s) in some embodiments.

When deployed in an automobile, the laminate materials may be provided on a roller shaft, with the laminate material configured to be rolled onto or off of the shaft so that the laminate material may be moved to an extended state or a retracted state. The laminate material may possess a sufficient strength so that it is fit to be repeatedly moved between the retracted state and the extended state and/or so that the laminate material is configured to withstand repetitive transitioning between being rolled up and being unrolled without suffering negative consequences, such as sagging, delamination, or dimensional changes that could cause binding of the activation mechanism for extending and retracting the laminate material. Additionally, the laminate material may be configured to stretch in desirable amounts to allow the laminate material to be more durable over time. For example, the laminate material (and its corresponding material, such as the solution dyed yarns or fibers) may be designed to enable at least 2% or more stretch in a bias direction of the laminate material, at least 1% or more stretch in a length direction of the laminate material, and at least 1% or more stretch in a width direction of the laminate material. In some embodiments, the laminate material may be designed to enable 2%-30% stretch in the bias direction; although other ranges and percentages are contemplated, such as 2%-20%, 2%-15%, 2%-10%, 3%-30%, 3%-15%, 4%-30%, 5%-30%, 5%-25%, 3% or more, 4% or more, 5% or more, 10% or more, 12% or more, etc.

In some embodiments, a solution-dyed interior facing layer may undergo a supplemental piece dyeing process to adjust the overall color of the corresponding interior facing layer and the laminate material (such as when viewed from the interior of the automobile). In such a situation, that piece dyeing process may be significantly shorter than a traditional piece dye process for an interior facing layer that was not formed using solution dyed yarns or fibers. In this regard, significantly less chemicals and energy would be utilized - thereby keeping the overall processing to form the laminate material still much lower than a laminate material formed using the traditional piece dyeing process. Notably, such an approach that uses a supplemental piece dyeing process would be useful where the solution dye yarns or fibers generate a consistent color (e.g., a shade of black), but the color requirement is a slightly different shade of the color (e.g., a slightly different shade of black). In such a situation, the large batches of the solution dye yarn or fiber could still be used, but small batches of piece dyeing for particular interior facing layers with unique color shades could be used to generate that unique color shade.

In an example embodiment, a laminate material for use in an automobile is provided. The laminate material comprising an exterior facing layer; an interior facing layer formed from at least a plurality of solution dyed yarns or fibers; and at least one intermediate layer, wherein the at least one intermediate layer joins the exterior facing layer and the interior facing layer. The laminate material is configured to transition between a retracted state in which the laminate material is at least partially rolled up about an axis and an extended state where the laminate material at least partially covers a window of the automobile so as to at least partially obstruct light passing through the window from entering an interior of the automobile.

In some embodiments, the laminate material is fit to be repeatedly moved between the retracted state and the extended state without exhibiting sag, delamination, or dimensional change that would prevent operation of an activation mechanism configured to extend or retract the laminate material.

In some embodiments, the window is a sunroof, a moonroof, or a full glass roof.

In some embodiments, the at least one intermediate layer comprises a dot matrix adhesive or other bonding mechanism.

In some embodiments, the at least one intermediate layer comprises a film configured to be heated to a threshold temperature so that the film is at least partially melted and joins the exterior facing layer and the interior facing layer together.

In some embodiments, the interior facing layer, the exterior facing layer, and the at least one intermediate layer each comprise recycled material.

In some embodiments, the laminate material is configured to obstruct at least about 90 percent of the light from shining through the window.

In some embodiments, the interior facing layer and the at least one intermediate layer each have a specific color when independently viewed, and wherein the laminate material has an overall color once formed that is different from the specific color of the interior facing layer or the at least one intermediate layer.

In some embodiments, the laminate material defines an unstretched bias length in a bias direction when the laminate material is not being stretched, and wherein the laminate material is configured to stretch in the bias direction by at least about 2 percent of the unstretched bias length. In some embodiments, the laminate material defines an unstretched length in a length direction when the laminate material is not being stretched, and wherein the laminate material is configured to stretch in the length direction by at least about 1 percent of the unstretched length. In some embodiments, the laminate material defines an unstretched width in a width direction when the laminate material is not being stretched, and wherein the laminate material is configured to stretch in the width direction by at least about 1 percent of the unstretched width. In some embodiments, the laminate material is configured to stretch in the bias direction within a range of 5 percent to 30 percent of the unstretched bias length.

In some embodiments, the interior facing layer is formed with a color defined by the plurality of solution dyed yarns or fibers and a supplemental color from being piece dyed.

In some embodiments, the plurality of solution dyed yarns or fibers are formed by adding colorant to a master batch of polymer blend used to form the yarns or fibers or adding colorant to an extruder to mix with the polymer blend melt to form the yarns or fibers.

In some embodiments, the interior facing layer is formed of the plurality of solution dyed yarns or fibers and one or more non-solution dyed yarns or fibers.

In another example embodiment, a method for forming a laminate material for use in an automobile is provided. The method comprises forming solution dyed yarns or fibers through solution dyeing; forming an interior facing layer using at least some of the solution dyed yarns or fibers; positioning at least one intermediate layer on a first side of the interior facing layer; positioning an exterior facing layer opposite to the interior facing layer relative to the at least one intermediate layer such that the at least one intermediate layer is between the interior facing layer and the exterior facing layer; and processing at least one of the interior facing layer, the at least one intermediate layer, or the exterior facing layer to cause the at least one intermediate layer to join the exterior facing layer and the interior facing layer. The laminate material is configured to be used to cover a window within the automobile to obstruct at least a portion of light from shining through the window.

In some embodiments, the at least one intermediate layer comprises a film, and wherein processing of at least one of the interior facing layer, the at least one intermediate layer, or the exterior facing layer to cause the at least one intermediate layer to join the exterior facing layer and the interior facing layer is performed by heating the film to a threshold temperature so that the film is at least partially melted and joins the exterior facing layer and the interior facing layer together.

In some embodiments, forming the solution dyed yarns or fibers comprises adding colorant to a master batch of polymer blend used to form the yarns or fibers or adding colorant to an extruder to mix with the polymer blend melt to form the yarns or fibers.

In some embodiments, the method further comprises piece dying the formed interior facing layer with a supplemental color prior to processing the at least one of the interior facing layer, the at least one intermediate layer, or the exterior facing layer to cause the at least one intermediate layer to join the exterior facing layer and the interior facing layer.

In another example embodiment, a system for covering a window of an automobile with a laminate material is provided. The system comprises the laminate material comprising an exterior facing layer; an interior facing layer formed from at least a plurality of solution dyed yarns or fibers; and at least one intermediate layer, wherein the at least one intermediate layer joins the exterior facing layer and the interior facing layer. The system further comprises a shaft. The laminate material is configured to transition between a retracted state in which the laminate material is at least partially rolled up on the shaft when the laminate is in a retracted state and an extended state where the laminate material at least partially covers the window of the automobile so as to at least partially obstruct light passing through the window from entering an interior of the automobile. The laminate material is fit to be repeatedly moved between the retracted state and the extended state without exhibiting sag, delamination, or dimensional change that would prevent operation of an activation mechanism configured to extend or retract the laminate material.

In some embodiments, the system further comprises one or more activation mechanisms configured to cause at least one of rotation of the shaft or movement of the laminate material between the retracted state and the extended state.

### BRIEF DESCRIPTION OF THE DRAWINGS

Reference will now be made to the accompanying drawings, which are not necessarily drawn to scale, and wherein:
FIG. 1 is a perspective view illustrating an example automobile having various windows including a sunroof, in accordance with some embodiments discussed herein;
FIG. 2A is a schematic cross-sectional view illustrating an example laminate material being used to cover a sunroof, with the laminate material being at a fully extended state, in accordance with some embodiments discussed herein;
FIG. 2B is a schematic cross-sectional view illustrating the sunroof of FIG. 2A where the laminate material is in a retracted state, in accordance with some embodiments discussed herein;
FIG. 3A is a schematic cross-sectional view of an example laminate material that may be used, in accordance with some embodiments discussed herein;
FIG. 3B is a block flow diagram illustrating an example system for manufacturing a laminate material comprising an interior facing layer formed of solution dyed yarns or fibers, in accordance with some embodiments discussed herein;
FIG. 4 is a schematic cross-sectional view of another example laminate material that may be used, in accordance with some embodiments discussed herein;
FIG. 5A is a schematic view illustrating an example laminate material in an unstretched condition and in a stretched condition, with the laminate material being stretched in a bias direction, in accordance with some embodiments discussed herein;
FIG. 5B is a schematic view illustrating an example laminate material in an unstretched condition and in a stretched condition, with the laminate material being stretched in a direction parallel to a crosswise grain, in accordance with some embodiments discussed herein;
FIG. 5C is a schematic view illustrating an example laminate material in an unstretched condition and in a stretched condition, with the laminate material being stretched in a direction parallel to a lengthwise grain, in accordance with some embodiments discussed herein;
FIG. 6 is a flow chart illustrating an example method for testing color and/or other properties of solution dyed yarn or fiber, such as to determine if use of the solution dyed yarn or fiber will result in formation of a laminate material that meets specification requirements, in accordance with some embodiments discussed herein; and
FIG. 7 is a flow chart illustrating an example method for forming solution dyed yarn or fiber and the resulting laminate material using the solution dyed yarn or fiber, in accordance with some embodiments discussed herein.

### DETAILED DESCRIPTION

Example embodiments now will be described more fully hereinafter with reference to the accompanying drawings, in which some, but not all embodiments are shown. Like reference numerals generally refer to like elements throughout. For example, reference numerals 220, 320, 420 each refer to example laminate materials.

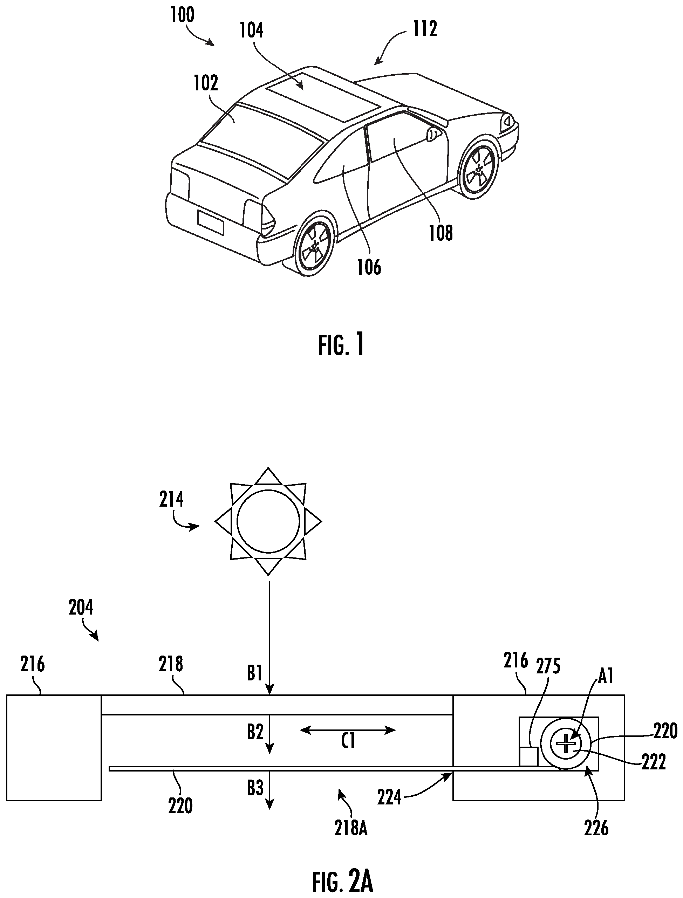

An example automobile 100 having various windows including a sunroof is illustrated in the perspective view of FIG. 1. The automobile 100 has a front window 102 in the form of a windshield, a window 104 in the form of a sunroof (although other roof windows are contemplated herein for use with various example laminate materials, such other roof windows including, for example, a moonroof, a full glass roof, etc.), a driver's door window 106, a second row window 108, and a rear window 112. Windows similar to windows 106, 108 may also be provided on the passenger's side of the automobile 100. The windows may each have distinct shapes and sizes. Notably, while the example embodiment shown utilizes a sunroof, various embodiments of the present invention are meant to be utilized with any type of automobile window, such as a sunroof, a moonroof, or a full glass roof.

As the automobile 100 is exposed to sunlight, this sunlight tends to enter the internal volume (e.g., the interior) of the automobile 100 through the windows, and particularly through the sunroof window 104. This sunlight may provide undesired light, heat (e.g., through infrared radiation), and/or ultraviolet (UV) radiation into the internal volume of the automobile 100.

In various embodiments described herein, a laminate material is contemplated that provides a desired color and/or other properties for use in a cover while also providing significant cost-savings over existing approaches. An exterior facing layer, an interior facing layer, and one or more intermediate layers are included in the laminate material. The interior facing layer may be formed from a plurality of yarns or fibers. The yarns or fibers that form the interior facing layer may be solution dyed so that the appropriate color is obtained, and the yarns or fibers may formed into the interior facing layer of the laminate material (e.g., via knitting, weaving, and/or otherwise attaching/bonding together (e.g., non-woven processes)). In some embodiments, in addition to the solution dyed yarns or fibers, some of the yarns or fibers may be non-solution dyed (e.g., the yarns or fibers may be natural yarns) and those may be undyed or dyed after formation. In such embodiments, the different types of yarns or fibers may formed into the interior facing layer of the laminate material (e.g., via knitting, weaving, and/or otherwise attaching/bonding together (e.g., non-woven processes)). Notably, the exterior facing layer, in some embodiments, could be similarly formed (including in different ways as noted above).

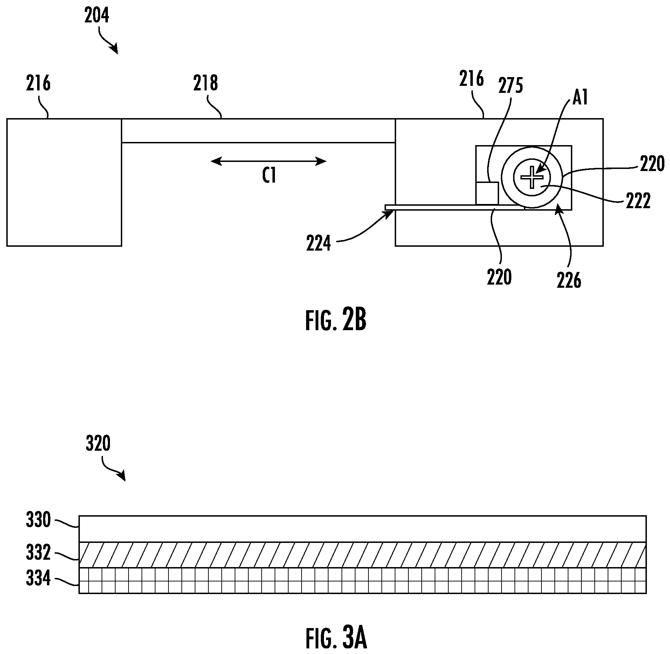

The laminate material may be provided on a roller (e.g., on a shaft of a roller), with the laminate material configured to be rolled up on the roller so that the laminate material is provided in a retracted state or rolled off of the roller so that the laminate material is provided in an extended state. FIG. 2A is a schematic cross-sectional view illustrating an example laminate material 220 being used to cover a roof window (in the form of a sunroof 204), with the laminate material 220 being at a fully extended state. FIG. 2B is a schematic cross-sectional view illustrating the sunroof 204 of FIG. 2A when the laminate material 220 is in a retracted state.

The laminate material 220 is configured to transition between an extended state and a retracted state as indicated by the arrowed line C1. In the extended state of FIG. 2A, the laminate material 220 covers a window 218 of an automobile so as to at least partially obstruct light passing through the window 218 from entering an interior of the automobile. In the retracted state of FIG. 2B, the laminate material 220 is rolled up about an axis A1 on the roller shaft 222 of a roller. The shape and size of the laminate material 220 may be selected so that it may effectively cover a particular window, and the laminate material 220 may be cut in some embodiments to obtain this particular shape and size. Notably, in some embodiments, the thickness of the laminate material may be considered in the formation of the laminate material. In this regard, it may be desirable to maintain a minimum thickness so that the laminate material, when rolled up on the shaft, still maintains a relatively small overall thickness so as to be positionable in the roof space (e.g., upper wall) of the automobile (which is desirably small in thickness itself). In some embodiments, different features may be applied and/or attached/bonded to the laminate material for ensuring proper coverage of the window 218, proper extension/retraction, and/or other uses within the desired usage with the automobile. For example, the laminate material may be formed with edges that work in concert with the automobile (e.g., guides or other features) to ensure that the laminate material stays extended in the width direction across the window 218. Notably, however, other features may be used for such a purpose, such as using grooves, tracks, or other features. As another example, the front edge of the laminate material may be configured to attach or rest within a corresponding feature of the automobile in the fully extended position so as to hold the laminate material in the extended state to cover the window 218. Such a front edge may be attached to a bar, roller, or other feature and/or may be modified accordingly (e.g., have an attachment feature, edge feature, etc.).

One or more activation mechanisms 275 may be provided at various locations in the sunroof 204 to cause movement of the laminate material 220 between the extended state and the retracted state. The activation mechanism 275 may be configured to cause rotation of the roller shaft 222 in a clockwise or counterclockwise direction. Additionally, in some embodiments, the activation mechanism 275 may be configured to cause the laminate material 220 to be effectively moved between the extended and retracted state without the laminate material 220 being rolled up (such as using a different extension/retraction approach). The activation mechanism 275 may be positioned in the internal recess 226, but the activation mechanism 275 may be positioned at other locations as well. Example activation mechanisms 275 may include one or more motors, servomotors, stepper motors, DC motors, and the like. Additionally, gears, geartrains, electronics, or other devices/features may form part of the activation mechanisms as appropriate. In some embodiments, the activation mechanism 275 may interact with one or more features of the laminate material and/or the automobile to cause the extension or retraction in a desirable manner (such as with reference to various features noted above).

In the schematic view of FIGS. 2A-2B, a sunroof 204 is illustrated. A sunroof opening 218A is positioned in an upper wall 216 of an automobile, and a window 218 of the sunroof 204 is positioned in the sunroof opening 218A. On the right side of the window 218 in FIG. 2A, an internal recess 226 is formed in the upper wall 216 proximate to the sunroof opening 218A. A roller 222 is positioned in the internal recess 226 so that the roller 222 has an axis of rotation A1. This axis A1 extends in directions moving into and out of the page in FIG. 2A. The roller 222 may optionally be mounted in the internal recess 226. A small gap 224 is formed between the internal recess 226 and the sunroof opening 218A. This gap 224 permits the laminate material 220 to extend therethrough to transition between the extended state and the retracted state.

The laminate material 220 may be fit to be repeatedly moved between the retracted state and the extended state and/or to withstand repetitive transitions between being rolled up and being unrolled, such as without exhibiting sag, delamination, or dimensional change that would prevent operation of the activation mechanism configured to extend or retract the laminate material. For example, the laminate material 220 and other laminate materials described herein may be configured to be rolled and unrolled between the fully extended state and fully retracted state over 100 times without exhibiting sag, delamination, or dimensional change that would prevent operation of the activation mechanism configured to extend or retract the laminate material (although other numbers of times are contemplated, such as over 200 times, over 500 times, over 1,000 times, and even over 10,000 times without exhibiting sag, delamination, or dimensional change that would prevent operation of the activation mechanism configured to extend or retract the laminate material).

As illustrated in FIG. 2A, the sun 214 may be positioned over the automobile, causing sunlight to be directed from the sun 214 to the window 218 of the sunroof 204 as indicated by the arrow B1. Upon reaching the window 218, a portion of the sunlight may be allowed to pass through the window 218 as indicated by the arrow B2. Remaining portions of the sunlight may be reflected, absorbed, or otherwise blocked. Accordingly, the laminate material 220 may be configured to reduce the amount of sunlight that enters into the interior volume of the automobile through the window 218. For the portion of the sunlight passing through the window 218 (as indicated by arrow B2), a large amount of the sunlight may be reflected, absorbed, or otherwise blocked by the laminate material 220. A small amount, if any, of the sunlight may be allowed to pass through as indicated by the arrow B3. By using solution dyed yarns in the laminate material 220, the laminate material 220 may be provided with enhanced resistance to UV radiation relative to other materials not containing solution dyed yarns.

By moving the laminate material 220 to a fully extended state, the amount of light entering into the interior volume of the automobile may be greatly reduced. In some embodiments, the use of the laminate material 220 may reduce the amount of light entering into the interior volume of the automobile through a particular window by about 80 percent or more, by about 85 percent or more, by about 90 percent or more, by about 95 percent or more, by about 97.5 percent or more, by about 99 percent or more, by about 99.5 percent or more, or by about 100 percent. The amount of light blocking may be tested and/or measured using the Japanese Industrial Standard JIS L 1055, as revised on February 20, 2009, entitled "Testing methods for light blocking effect of curtain materials," which is incorporated by reference herein for all purposes. With more specific detail being available in the document, JIS L 1055 measures the light transmission produced after light from a light source (calibrated to the appropriate light value) passes through a portion of the tested material, where the tested material is 100 mm away from the light receptor. Three different test pieces of the tested material are tested and the average is rounded to obtain the light blocking rate (%) of the tested material.

FIG. 3A is a schematic cross-sectional view for an example laminate material that may be used in an automobile to cover a window such as a window on a sunroof. The laminate material 320 includes an exterior facing layer 330, an intermediate layer 332, and an interior facing layer 334. The interior facing layer 334 may be formed from at least a plurality of solution dyed yarns or fibers, such as described herein. In this regard, solution dyeing yarns or fibers may be formed (e.g., knitted, woven, or otherwise attached/bonded together (e.g., nonwoven)) into the interior facing layer 334. The material in the interior facing layer 334 may comprise polyester, nylon, acrylic, polypropylene, polyethylene, and other similar materials, but other materials may be used in the interior facing layer 334 in some embodiments. Colorants used for solution dyeing may depend on the specific color requirements, but colorants such as carbon black colorants or pigments, other colored pigments, pigment dyes, disperse dyes, direct dyes, and similar may be used as colorants for solution dyeing.

The exterior facing layer 330 is also provided in the laminate material 320. The exterior facing layer 330 may include a different material than the interior facing layer 334 in some embodiments. However, in other embodiments, the exterior facing layer 330 may comprise at least a plurality of solution dyed yarns or fibers, and the color of the solution dyed yarns or fibers within the layers 332, 334 may optionally be the same or may optionally be different. In some embodiments, the exterior facing layer 330 may comprise polyester, nylon, acrylic, polypropylene, polyethylene, and other similar materials, but other materials may be used in the exterior facing layer 330. The exterior facing layer 330 or the individual yarns or fibers therein may, for example, be piece dyed, yarn dyed, or solution dyed in some embodiments to control the color of the exterior facing layer 330. Alternatively, the exterior facing layer 330 may not include material that has been dyed through solution dyeing, yarn dyeing, or piece dyeing.

The intermediate layer 332 is positioned between the exterior facing layer 330 and the interior layer 334. The intermediate layer 332 joins the layers 330, 334 together. In some embodiments, the intermediate layer 332 may comprise an adhesive material such as a dot matrix adhesive, web adhesive, or other bonding mechanism. The adhesive material may comprise polyester, vinyl, a resin, and/or acrylic material such as a solvent acrylic. Other adhesives may be used as well such as glues, fabric glues, polyurethane, epoxies, and the like.

Alternatively, the intermediate layer 332 may comprise a film, and the film may be heated to a threshold temperature so that the film is at least partially melted. After partially melting or fully melting, the film in the intermediate layer 332 may join the exterior facing layer 330 and the interior facing layer 334 together. The film may comprise a thermoplastic resin so as to enable softening and rehardening thereof (e.g., through heating and cooling). In some embodiments, the film may be formed of polyethylene, polypropylene, polyester, polyurethane, or other materials. In some embodiments, the exterior facing layer 330, the interior facing layer 334, and the intermediate layer 332 may each comprise recycled material. For example, recycled polyester may be used in one of the layers 330, 332, or 334. Where the intermediate layer 332 comprises a film, the film may be selected so that it has an appropriate color, thickness, light fastness properties, and/or other properties.

The exterior facing layer 330, the intermediate layer 332, and the interior facing layer 334 may each have a specific color when independently viewed. However, in some embodiments, the laminate material 320 may have an overall color that is different from the specific color of at least one of the exterior facing layer 330, the interior facing layer 334, or the intermediate layer 332. In other words, once the layers of the laminate material 320 are positioned relative to each other and then bonded together, this may cause the overall color of the laminate material 320 to be different relative to the specific colors of the individual layers. This is especially the case when the interior facing layer 334 has relatively open construction, allowing more of the color from the intermediate layer (and, perhaps, the exterior facing layer) to be visible therethrough (when being viewed from the interior of the automobile. However, when the interior facing layer is denser, the color of the interior facing layer 334 may tend to dominate the overall perceived color of the laminate material 320 when the laminate material 320 is viewed from the interior of the automobile. Processing through lamination or some other approach to bond layers together may also adjust the perceived color of the laminate material 320.

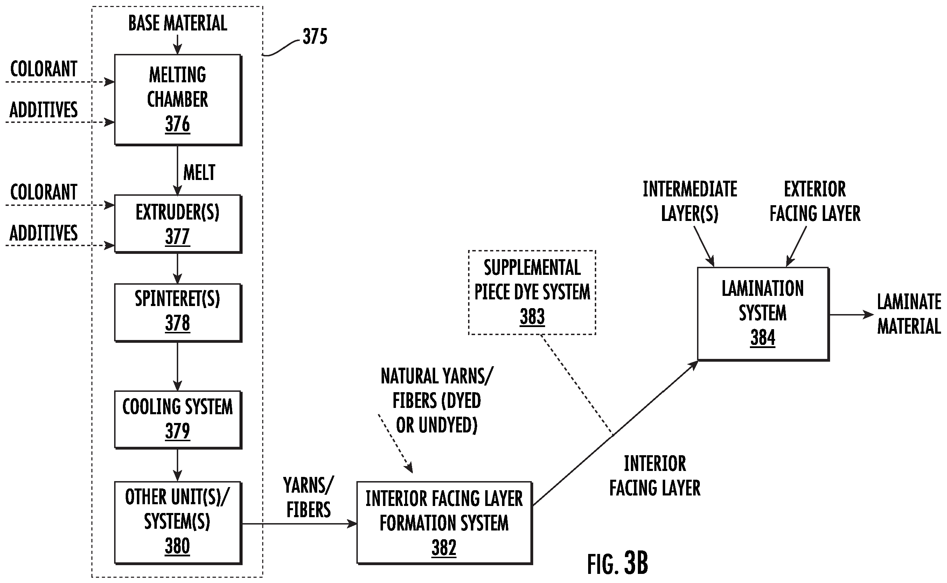

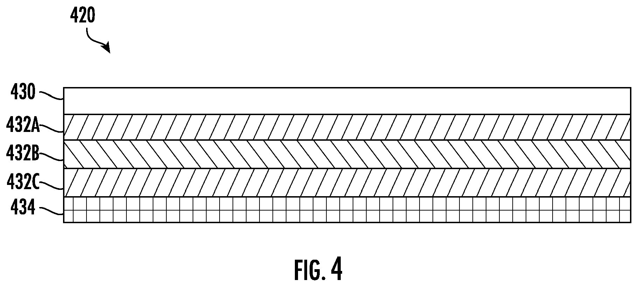

FIG. 3B is a process flow diagram illustrating various types of equipment/systems that may be used to form a laminate material formed with an interior facing layer using solution dyed yarn or fiber (such as described herein), such as similar to the laminate material 320 of FIG. 3A or the laminate material 420 of FIG. 4. The solution dyed process 375 is illustrated with optional approaches for adding the colorant and/or additives, such as described herein. In this regard, in order to form the solution dyed yarn or fiber, in some embodiments, the colorant and/or additives may be mixed into a master batch of polymer melt (such as formed from a polymer resin (e.g., base material)), such as in the melting chamber 376 prior to extrusion. Additionally or alternatively, the colorant and/or additive may be added to the polymer melt during extrusion, such as being introduced to the extruder 377. The base material may include polyester, nylon, acrylic, polypropylene, polyethylene, and/or other similar materials, but other materials may be used as the base material as well. The colorants may be selected based on the final color properties required, based on the polymer used, and/or based on other desired properties of the fiber, yarn, interior facing layer, and/or laminate material. Additives may be configured to adjust various properties of fibers/yarns that are formed, including resistance to UV light, flame retardance, and other characteristics. Additives such as antioxidants may be used to help inhibit oxidation reactions in any fibers/yarns that are formed. In some embodiments, other surfactants or dispersants may serve as additives used to help mix the materials together. Other additives such as anti-static agents, antimicrobial agents, coupling agents, compatibilizers, lubricants, fluorescent whitening agents, and/or soil release agents may be used, but other additives may also be used.

The extruder(s) 377 may include a barrel, and the input material may be fed into an internal volume of the barrel. A mixer such as a screw, an auger, or the like may be positioned in the internal volume of the barrel, and the mixer may be configured to mix the input materials and to urge the input materials towards an outlet of the barrel. All of the input materials may be mixed together so that they are evenly dispersed throughout the melt, thereby ensuring color consistency and consistent properties throughout any resulting fibers or downstream products that are formed.

The spinneret(s) 378 may be positioned at an outlet of the extruder(s) 377. The spinneret(s) 378 may include a plurality of small holes, and the materials urged through the extruder(s) 377 may be forced through the holes of the spinneret(s) 378. This results in fibers being formed into yarns that need to be cooled, such as via air or water in the cooling system 379 to form the solution dyed yarns. In some embodiments, individual fibers may be formed instead of yarns. In some embodiments, additional processing may occur, such drawing of the fibers/yarns (e.g., to adjust various properties, such as elongation and strength of the yarns) and packaging thereof (e.g., winding up, finishing, etc.) - which may be accomplished via one or more other unit(s)/system(s) 380.

The solution dyed yarns or fibers may be provided to an interior facing layer formation system 382. In this regard, the solution dyed yarns or fibers may be formed into the interior facing layer, such as via knitting, weaving, or other attachment/bonding mechanisms (e.g., to form knitted fabric, woven fabric, and/or nonwoven fabric). In some embodiments, natural yarns or fibers (dyed or undyed) may also be used along with the solution dyed yarns or fibers to form the interior facing layer. Example knitting systems may be any type of machine that is configured to knit yarns together or to otherwise form fabrics from individual yarns. The knitting system may, for example, be a flatbed knitting machine, a circular knitting machine, a warp knitting machine, a jacquard knitting machine, or a double jersey machine. Example weaving systems may be any type of machine that is configured to weave yarns together or otherwise form fabric from individual yarns. The weaving system may, for example, be a rapier loom, a shuttle loom, a circular loom, an air jet loom, a jacquard loom, among many other types of looms. Example nonwoven systems may be any type of machine that is configured to attach/bond fibers together (e.g., mechanically, thermally, or chemically) or otherwise form fabric from individual fibers or yarns.

In some embodiments, additional processing of the interior facing layer may occur, such as at the interior facing layer formation system 382. For example, a tenter frame may be used to process the interior facing layer and/or to set the width, weight, and/or other properties of the interior facing layer. Additionally or alternatively, the interior facing layer may be cleaned, such as using a washer, a piece dye machine, or other machine. In such processes or additional processes, the fibers of the interior facing layer may be bulked up, such as to increase density of the yarns.

In some embodiments, such as described herein the interior facing layer may undergo a supplemental piece dye process to adjust the overall color of the corresponding interior facing layer. For example, depending on the situation, the interior facing layer that is formed may pass to a supplemental piece dye system 383 to adjust the color of the interior facing layer. In such a situation, that piece dye process may be significantly shorter and may use significantly less dye stuff than a traditional piece dye process for an interior facing layer that was not formed using solution dyed yarns. In this regard, significantly less chemicals and energy are utilized - thereby keeping the overall processing to form the laminate material still much lower than a laminate material formed in the traditional piece dye process. Notably, such an approach that uses a supplemental piece dye process would be useful where the solution dye fibers generate a consistent color (e.g., a shade of black), but the color requirement is a slightly different shade of the color (e.g., a slightly different shade of black). In such a situation, the large batches of the solution dye fiber could still be used, but small batches of piece dyeing for particular interior facing layers with unique color shades could be used to generate that unique color shade.

The intermediate layer(s) and the exterior facing layer may be formed, such as described herein, in similar or different ways as may be appropriate for the type of layer being formed and used. Notably, various example materials of such layers are described herein.

The interior facing layer, the exterior facing layer, and one or more intermediate layers may be provided to the lamination system 384 so that the layers may be joined together. The lamination system 384 may be a laminating machine in some embodiments, with the laminating machine being configured to laminate each of the layers together to form a laminate material. However, the lamination system 384 may be some other type of machine that is configured to heat the layers (e.g., an oven, a heating chamber having heated rollers, UV radiation heating, and the like). In some embodiments, the intermediate layers may comprise a meltable film therein, and heating the layers may cause the meltable film to at least partially melt so that it assists in joining the interior facing layer, the exterior facing layer, and the intermediate layer(s) together. The lamination system 384 may output the laminate material. The laminate material may undergo further treatment in some embodiments to ensure that it has the desired properties. Finally, one or more other devices may be used to cut the laminate material so that it has the appropriate dimensions.

While only one intermediate layer 332 is shown in the laminate material 320 of FIG. 3A, one or more additional intermediate layers may be included in laminate materials in some embodiments. FIG. 4 is a schematic cross-sectional view for another example laminate material 420 that may be used, with the laminate material including three intermediate layers. The exterior facing layer 430 of the laminate material 420 may be similar to the exterior facing layer 330 of the laminate material 320, and the interior facing layer 434 of the laminate material 420 may be similar to the interior facing layer 334 of the laminate material 320.

The intermediate layers in the laminate material 420 include a first intermediate layer 432A, a second intermediate layer 432B, and a third intermediate layer 432C. However, a different number of intermediate layers may be used in other embodiments (e.g., 2, 4, 5, 6, or more). In some embodiments, the first intermediate layer 432A and/or the third intermediate layer 432C may include materials similar to the intermediate layer 332 in the laminate material 320 of FIG. 3A. For example, the layers 432A, 432C may optionally include an adhesive material, a dot matrix adhesive material, a web adhesive material, other bonding mechanism, or a film material similar to those described herein. In some embodiments, the second intermediate layer 432B may be distinguishable from other intermediate layers, with the second intermediate layer 432B including one or more films, such films, for example, may be configured to obstruct visible light from moving through the window and into the interior of the automobile. For example, there may be a white film, a black film, any other color film, and/or any combination thereof. If more than one film is used, in some embodiments, the films may be laminated together or otherwise attached within the intermediate layer (e.g., the second intermediate layer 432B). In this regard, the second intermediate layer 432B may be used for other purposes, such as to increase the rigidity or strength of the overall laminate material 420, to adjust the color of the overall laminate material 420, to adjust the thickness of the laminate material 420, and/or to provide other desired properties.

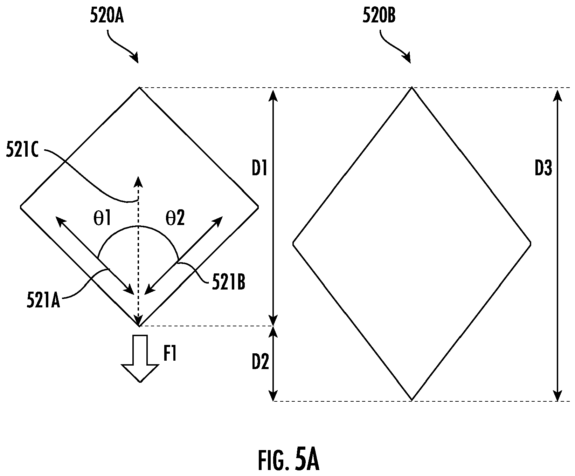

The laminate material described herein may be fit to be repeatedly moved between the retracted state and the extended state and/or to withstand repetitive transitions between being rolled up and being unrolled without exhibiting sag, delamination, or dimensional change that would prevent operation of an activation mechanism configured to extend or retract the laminate material. This may be accomplished by making the laminate material capable of being stretched without any substantial deformation. FIG. 5A is a schematic view illustrating an example laminate material in an unstretched condition and in a stretched condition, with the laminate material being stretched in a bias direction. The stretched laminate material 520B defines a length D3 in a bias direction 521C. The bias direction 521C extends at an angle Θ1 relative to a lengthwise grain 521A and/or at an angle Θ2 relative to a crosswise grain 521B, with these angles Θ1, Θ2 both being about 45 degrees in the unstretched laminate material 520A. The bias direction 521C is the direction that a tension force F1 is applied in to stretch the laminate material, and the length D3 was obtained when the tension force F1 was approximately 20 Newtons, but a different tension force may be applied in other embodiments. The unstretched laminate material 520A defines a length D1 along the bias direction 521C when left unstretched. Thus, the stretched laminate material 520B extends an additional length D2 more than the unstretched laminate material 520A. In some embodiments, the stretched laminate material 520B may stretch at least about 1 percent more than the unstretched laminate material 520A when a force of about 20 Newtons is applied, but this amount may be at least about 2 percent or more in some embodiments. In some embodiments, the laminate material may be designed to enable 2%-30% stretch in the bias direction; although other ranges and percentages are contemplated, such as 2%-20%, 2%-15%, 2%-10%, 3%-30%, 3%-15%, 4%-30%, 5%-30%, 5%-25%, 3% or more, 4% or more, 5% or more, 10% or more, 12% or more, etc. The stretch properties of laminate materials, other layers, or other fabrics described herein may be tested and/or measured using ASTM D3107 testing methods, as revised on July 22, 2019, entitled "Standard Test Methods for Stretch Properties of Fabrics Woven from Stretch Yarns," which is incorporated by reference herein for all purposes.

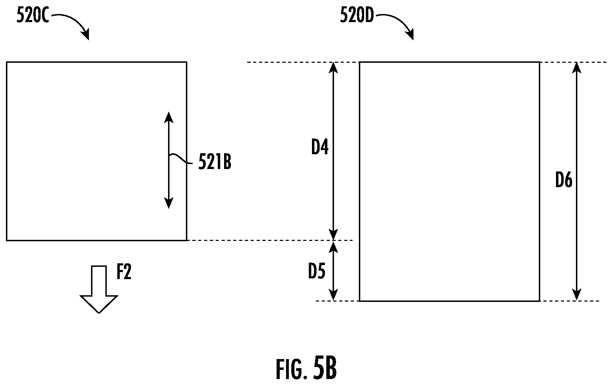

FIG. 5B is a schematic view illustrating an example laminate material in an unstretched condition and in a stretched condition, with the laminate material being stretched in a direction parallel to the crosswise grain 521B. The stretched laminate material 520D defines a length D6 in the direction parallel to the crosswise grain 521B. A tension force F2 is applied to stretch the laminate material in a direction parallel to the crosswise grain 521B, and the length D6 was obtained when the tension force F2 was approximately 20 Newtons, but a different tension force may be applied in other embodiments. The unstretched laminate material 520C defines a length D4 in a direction parallel to the crosswise grain 521B when left unstretched. Thus, the stretched laminate material 520D extends an additional length D5 more than the unstretched laminate material 520C. In some embodiments, the stretched laminate material 520D may stretch at least about 1 percent more than the unstretched laminate material 520C when a force of about 20 Newtons is applied. In some embodiments, the laminate material may be designed to enable 2% or more stretch in the width direction; although other ranges and percentages are contemplated, such as 1%-10%, 2%-10%, 2%-5%, 3%-5%, 3% or more, 4% or more, 5% or more, 10% or more, 12% or more, etc.

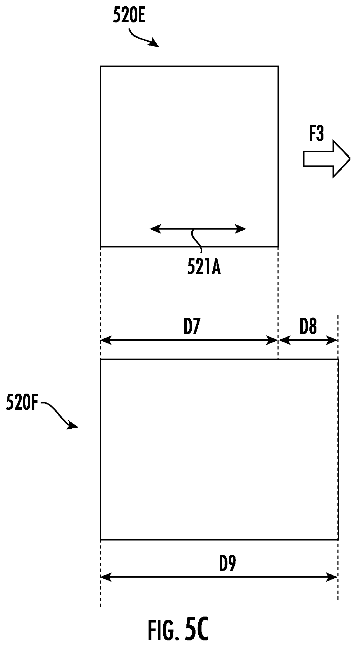

In some embodiments, the stretch properties for the laminate material when the laminate material is stretched in directions parallel to the lengthwise grain 521A may be similar or identical to the stretch properties for the laminate material when the laminate material is stretched in directions parallel to the crosswise grain 521B. FIG. 5C is a schematic view illustrating an example laminate material in an unstretched condition and in a stretched condition, with the laminate material being stretched in a direction parallel to the lengthwise grain 521A. The stretched laminate material 520F defines a length D9 in the direction parallel to the lengthwise grain 521A. A tension force F3 is applied to stretch the laminate material in a direction parallel to the lengthwise grain 521A, and the length D9 was obtained when the tension force F3 was approximately 20 Newtons, but a different tension force may be applied in other embodiments. The unstretched laminate material 520E defines a length D7 in a direction parallel to the lengthwise grain 521A when left unstretched. Thus, the stretched laminate material 520F extends an additional length D8 more than the unstretched laminate material 520E. In some embodiments, the stretched laminate material 520F may stretch at least about 1 percent more than the unstretched laminate material 520E when a force of about 20 Newtons is applied. In some embodiments, the laminate material may be designed to enable 2% or more stretch in the length direction; although other ranges and percentages are contemplated, such as 1%-10%, 2%-10%, 2%-5%, 3%-5%, 3% or more, 4% or more, 5% or more, 10% or more, 12% or more, etc.

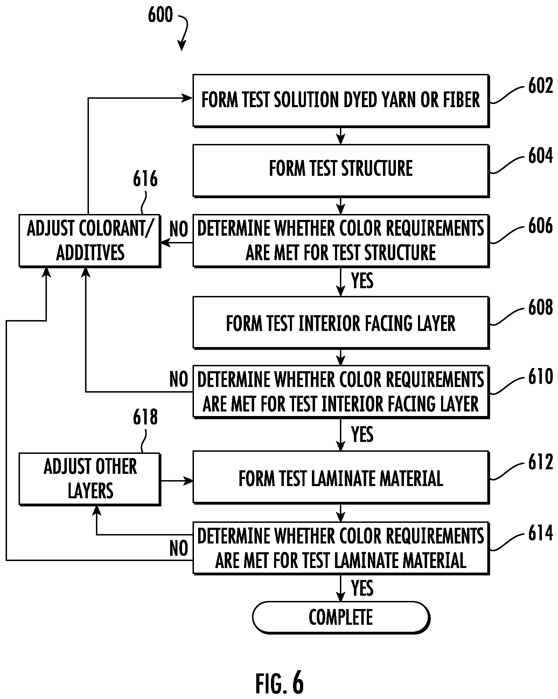

A flow chart illustrating an example method 600 for determining a proper color for the solution dyed yarn or fiber to result in a laminate material with the proper color is illustrated in FIG. 6. In this regard, as noted herein, the ultimate color viewable from the interior of the automobile will likely be different than the color of the solution dyed yarn or fiber after formation (e.g., due to the intermediate layer color, the density of the interior facing layer, and/or other factors (e.g., processing that occurs, the exterior facing layer color, etc.)).

At operation 602, test solution dyed yarns or fibers are formed using the approaches described herein. At operation 604, one or more test structures using the test solution dyed yarns or fibers are formed. In some embodiments, the test structures may be replica of the interior facing layer or a portion thereof (e.g., have similar density, knit or weave patterns, bonding techniques, etc.). In some embodiments, a "sock" or similar structure is formed at operation 604. Then, at operation 606, the color of the test structure is considered (e.g., does it match a desired test structure color that is determined based on the desired downstream laminate material color (noting that the desired test structure color may not match the desired downstream laminate material color); and it is determined whether to proceed with making a next level of product for testing, or whether to adjust the colorant or other additives at operation 616 and start over at operation 602. The determination made at operation 606 and other determinations of color may be performed using ASTM E1164 testing methodologies, as revised on July 7, 2023, entitled "Standard Practice for Obtaining Spectrometric Data for Object-Color Evaluation," which is incorporated by reference herein for all purposes.

Notably, at operation 606, the color may be deemed acceptable, although it may still not be the color of the color specification, as it could be, for example, within a range of shades that may result in the final laminate material having the color that qualifies for the color specification. If deemed acceptable, the solution dyed yarns or fibers may are used to form a test interior facing layer at operation 608, such as described herein. Then, at operation 610, the color of the test interior facing layer is considered (e.g., does it match a desired test interior facing layer color that is determined based on the desired downstream laminate material color (noting that the desired test interior facing layer color may not match the desired downstream laminate material color); and it is determined whether to proceed with making a next level of product for testing, or whether to adjust the colorant or other additives at operation 616 and start over at operation 602.

At operation 612, the test interior facing layer may be formed into the laminate material, such as with an intermediate layer and an exterior facing layer. Then, at operation 614, the color of the test laminate material is considered (e.g., as if being viewed from within the interior of the automobile) and it is determined whether the solution dyed yarn is acceptable for manufacture, or whether to either adjust color of one or more of the other layers (besides the interior facing layer) at operation 618 and retest; or to adjust the colorant or other additives at operation 616 and start over at operation 602.

In some embodiments, additionally or alternatively, as noted herein, the interior facing layer may also undergo supplemental piece dyeing to further adjust the color of the interior facing layer. This supplemental process may, thus, affect the overall laminate material color, such as may be useful to align the overall laminate material color with a desired color.

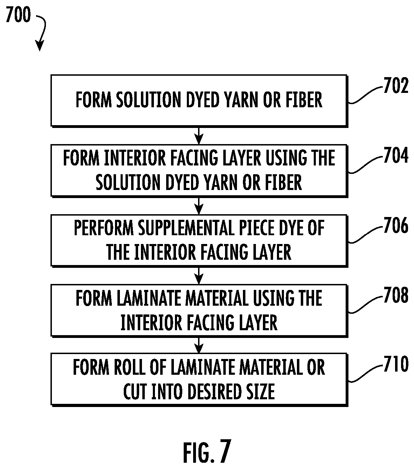

FIG. 7 is a flow chart illustrating an example method 700 for forming a laminate material using solution dyed yarn or fiber for the interior facing layer, such as described in various embodiments herein. At operation 702, solution dyed yarns or fibers may be formed, such as described herein. At operation 704, the solution dyed yarns or fibers may be used, e.g., alone or in combination with other yarns or fibers, to form (e.g., via knitting, weaving, or other attachment/bonding techniques) an interior facing layer, such as described herein. Optionally, such as described herein, a supplemental piece dye process may be used at operation 706 to adjust the color and/or other properties of the interior facing layer.

At operation 708, a laminate material may be formed using the interior facing layer formed of the solution dyed yarns or fibers, such as described herein. For example, the interior facing layer may be laminated with one or more intermediate layer(s) and an exterior facing layer, such as described herein. As noted previously, different color or other properties may be imparted on the laminate material depending on the intermediate layer (or exterior facing layer) and this may provide another optional opportunity to change the color and/or other properties of the laminate material to cause it to meet the desired specifications.

In some embodiments, with reference to operation 710, the laminate material may be formed into a roll of laminate material and shipped as is (e.g., in roll form) or the laminate material may be cut to size for shipping or further processing. For example, if the laminate material is cut to size, in some embodiments, the cut laminate material may be rolled up, such as onto a roller shaft, and shipped thereafter, such as for installation into an extension and retraction activation mechanism that is to be mounted in the automobile.

While various embodiments are described herein relating to the use of laminate material in automobiles to cover windows within the automobiles, the laminate material may be used to cover other windows or to serve other purposes in other embodiments. For example, the laminate material may be used for other covers that are not used in conjunction with any of the automobile (or other type vehicle) windows. However, these are only examples, and the laminate material may be used for other purposes.

### CONCLUSION

Many modifications and other embodiments set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A laminate material for use in an automobile, the laminate material comprising:
an exterior facing layer;
an interior facing layer formed from at least a plurality of solution dyed yarns or fibers; and
at least one intermediate layer, wherein the at least one intermediate layer joins the exterior facing layer and the interior facing layer,
wherein the laminate material is configured to transition between a retracted state in which the laminate material is at least partially rolled up about an axis and an extended state where the laminate material at least partially covers a window of the automobile so as to at least partially obstruct light passing through the window from entering an interior of the automobile.

2. The laminate material of claim 1, wherein the laminate material is fit to be repeatedly moved between the retracted state and the extended state without exhibiting sag, delamination, or dimensional change that would prevent operation of an activation mechanism configured to extend or retract the laminate material.

3. The laminate material of claim 1, wherein the window is a sunroof, a moonroof, or a full glass roof.

4. The laminate material of claim 1, wherein the at least one intermediate layer comprises a dot matrix adhesive or other bonding mechanism.

5. The laminate material of claim 1, wherein the at least one intermediate layer comprises a film configured to be heated to a threshold temperature so that the film is at least partially melted and joins the exterior facing layer and the interior facing layer together.

6. The laminate material of claim 1, wherein the interior facing layer, the exterior facing layer, and the at least one intermediate layer each comprise recycled material.

7. The laminate material of claim 1, wherein the laminate material is configured to obstruct at least about 90 percent of the light from shining through the window.

8. The laminate material of claim 1, wherein the interior facing layer and the at least one intermediate layer each have a specific color when independently viewed, and wherein the laminate material has an overall color once formed that is different from the specific color of the interior facing layer or the at least one intermediate layer.

9. The laminate material of claim 1, wherein the laminate material defines an unstretched bias length in a bias direction when the laminate material is not being stretched, and wherein the laminate material is configured to stretch in the bias direction by at least about 2 percent of the unstretched bias length.

10. The laminate material of claim 9, wherein the laminate material defines an unstretched length in a length direction when the laminate material is not being stretched, and wherein the laminate material is configured to stretch in the length direction by at least about 1 percent of the unstretched length.

11. The laminate material of claim 10, wherein the laminate material defines an unstretched width in a width direction when the laminate material is not being stretched, and wherein the laminate material is configured to stretch in the width direction by at least about 1 percent of the unstretched width.

12. The laminate material of claim 9, wherein the laminate material is configured to stretch in the bias direction within a range of 5 percent to 30 percent of the unstretched bias length.

13. The laminate material of claim 1, wherein the interior facing layer is formed with a color defined by the plurality of solution dyed yarns or fibers and a supplemental color from being piece dyed.

14. The laminate material of claim 1, wherein the plurality of solution dyed yarns or fibers are formed by adding colorant to a master batch of polymer blend used to form the yarns or fibers or adding colorant to an extruder to mix with the polymer blend melt to form the yarns or fibers.

15. The laminate material of claim 1, wherein the interior facing layer is formed of the plurality of solution dyed yarns or fibers and one or more non-solution dyed yarns or fibers.

16. A method for forming a laminate material for use in an automobile, the method comprising:
forming solution dyed yarns or fibers through solution dyeing;
forming an interior facing layer using at least some of the solution dyed yarns or fibers;
positioning at least one intermediate layer on a first side of the interior facing layer;
positioning an exterior facing layer opposite to the interior facing layer relative to the at least one intermediate layer such that the at least one intermediate layer is between the interior facing layer and the exterior facing layer; and
processing at least one of the interior facing layer, the at least one intermediate layer, or the exterior facing layer to cause the at least one intermediate layer to join the exterior facing layer and the interior facing layer,
wherein the laminate material is configured to be used to cover a window within the automobile to obstruct at least a portion of light from shining through the window.
